# EUROPEAN PATENT APPLICATION

(11) **EP 1 512 647 A1**
(43) Date of publication of application: **09.03.2005**
(21) Application number: 04020586.6
(22) Date of filing: 31.08.2004
(51) Int. Cl.: B65G 21/20

(54) **Apparatus for adjusting the relative position of side-walls for guiding containers**

(30) Priority: 08.09.2003 IT BO20030522
(71) Applicant: BAUMER S.r.l., 41013 Castelfranco Emilia (IT)
(72) Inventor: Gambetti, Mario, 41013 Castelfranco Emilia (Modena) (IT)
(74) Representative: Gustorf, Gerhard, Dipl.-Ing.

(57) **Abstract**

- A system for regulating the transverse distance (D) between the longitudinal guides (10a, 10b, etc.) comprises: -support means (41, 42, 43), which extend transversely relative to the said guides (10a, 10b, etc.); -support blocks (31a, 31b, etc.; 32a, 32b, etc.; 33a, 33b, etc.) which are disposed such as to slide along the said support means (41, 42, 43) and are designed to support the longitudinal guides (10a, 10b, etc.) and to have respective control heads (34a, 34b, etc.; 35a, 35b, etc.; 36a, 36b, etc.); -regulator means (51, 52, 53) with shaped-profile (54a, 54b, etc.; 55a, 55b, etc.; 56a, 56b, etc.), which are mobile longitudinally by command, wherein the said shaped profiles are associated with respective control heads (34a, 34b, etc.; 35a, 35b, etc.; 36a, 36b, etc.) of the support blocks (31a, 31b, etc.; 32a, 32b, etc.; 33a, 33b, etc.).

## Description

- The present invention relates to a system for regulating the transverse distance between longitudinal guides which are designed to configure longitudinal channels to contain objects, which system is particularly suitable for packaging machines.

### Known art

- At present, in packaging machines, in order to regulate the distance between the longitudinal guides, systems are provided which include one or more threaded bars, oriented transversely, which have different thread pitches and are supported rotoidally by the machine frame, wherein the said threaded bars are connected by nut screws which support the guides, such that, when the screws are rotated, differentiated transverse displacement of the guides is obtained, and thus modification of the transverse distance between the guides themselves.

- These systems have the disadvantage that they are very costly, and require lengthy assembly times.

- Other systems are also known of the articulated leverage type, which have the disadvantage of being inaccurate and costly.

### Object of the invention

- The object of the invention is thus to eliminate the above-described disadvantages.

- The invention, which is characterised by the claims, solves the problem of creating a system for regulating the transverse distance between longitudinal guides which are designed to configure longitudinal channels to contain objects, which system is particularly suitable for packaging machines, wherein the said system is characterised in that it comprises: -one or more support means, which extend transversely relative to the said guides; -one or more support blocks which are disposed such as to slide along the said support means, wherein the said support blocks are designed to support the said longitudinal guides and to have respective control heads; -one or more shaped-profile regulator means, wherein the said shaped profiles extend longitudinally in a manner which is inclined relative to the longitudinal axis of extension of the guides, wherein the said shaped profiles are mobile longitudinally by command, and wherein the said shaped profiles are associated with the respective control heads of the support blocks.

- The advantages obtained by means of the present invention consist mainly of a lower production and assembly cost and of improved functionality.

### Description of the attached figures

- Further characteristics and advantages of the present invention will become more apparent from the following description of two preferred practical embodiments provided here purely by way of non-limiting example, with reference to the figures of the attached drawings, in which:
- Figure 1 illustrates schematically and in exploded view the system which is the subject of the present invention;
- Figure 1A illustrates schematically and assembled the system which is the subject of the present invention;
- Figure 2 illustrates schematically the system which is the subject of the present invention in a first configuration with the guides spaced;
- Figure 3 illustrates schematically the system which is the subject of the present invention in a second configuration with the guides brought close to one another;
- Figure 4 illustrates a variant embodiment of the present invention, schematically and in lateral view;
- Figure 5 illustrates the variant in figure 4, schematically and in plan view; and
- Figure 6 illustrates a detail of the embodiment in figure 4, schematically and in plan view.

### Structural description of the first embodiment

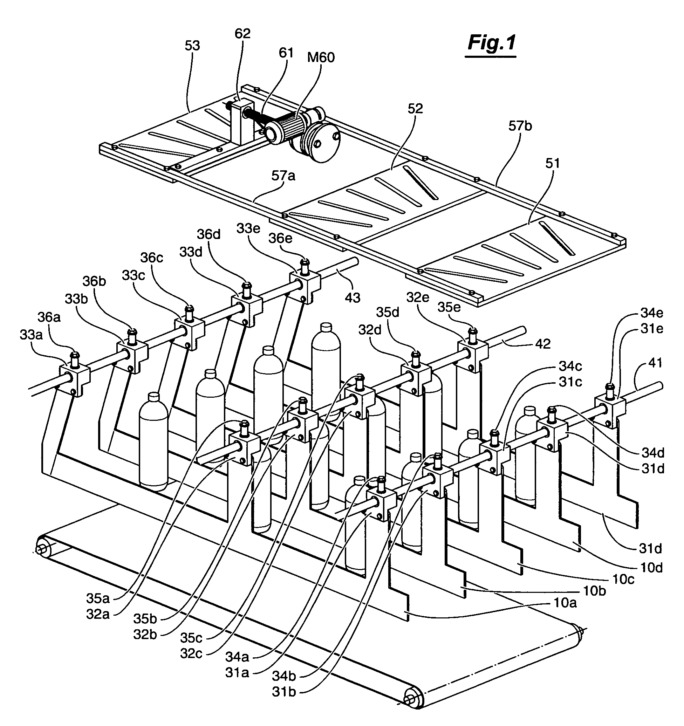

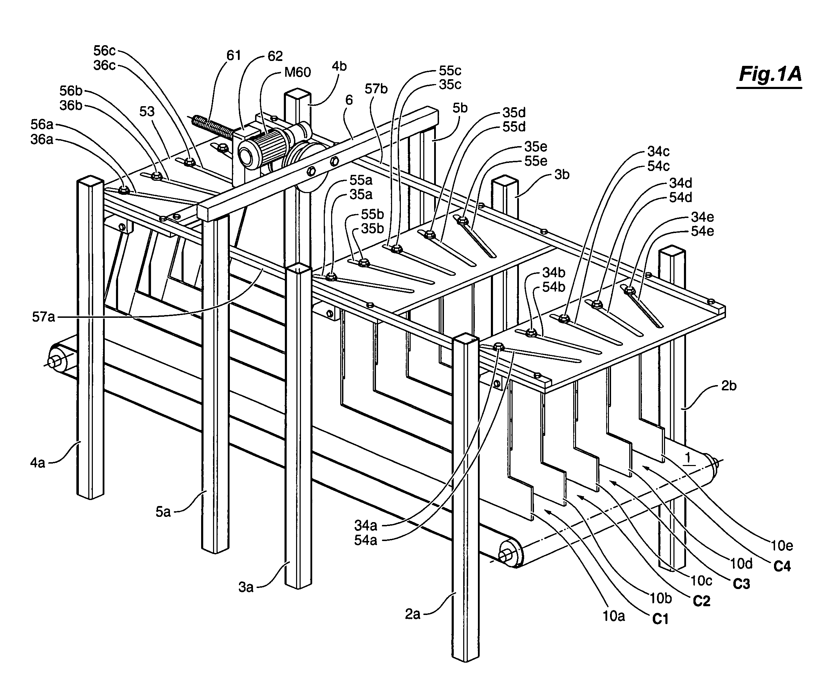

- With reference to figures 1 and 1A, the system comprises longitudinal guides 10a, 10b, etc., which are designed to configure channels c1, c2, etc., with a longitudinal extension, to contain objects, which objects are translated on a translation plane 1, which in the case illustrated consists of a conveyor belt.

- The longitudinal guides 10a, 10b, etc., are supported in a suspended manner, from top to bottom, by means of one or more support blocks, such as, for example, by means of three series which are spaced longitudinally, 31a-31b-etc., 32a-32b-etc., 33a-33b-etc., which are supported in a sliding manner by support means which extend transversely, such as, for example, by means of respective transverse bars 41, 42, 43, which in turn, see figure 1A, are supported by the piers 2a-2b, 3a-3b, 4a-4b, of the machine frame.

- The said support blocks 31a-31b-etc., 32a-32b-etc., 33a-33b-etc., have on their upper part respective control heads 34a-34b-etc., 35a-35b-etc., 36a-36b-etc., which extend vertically upwards, for reasons which will become apparent hereinafter.

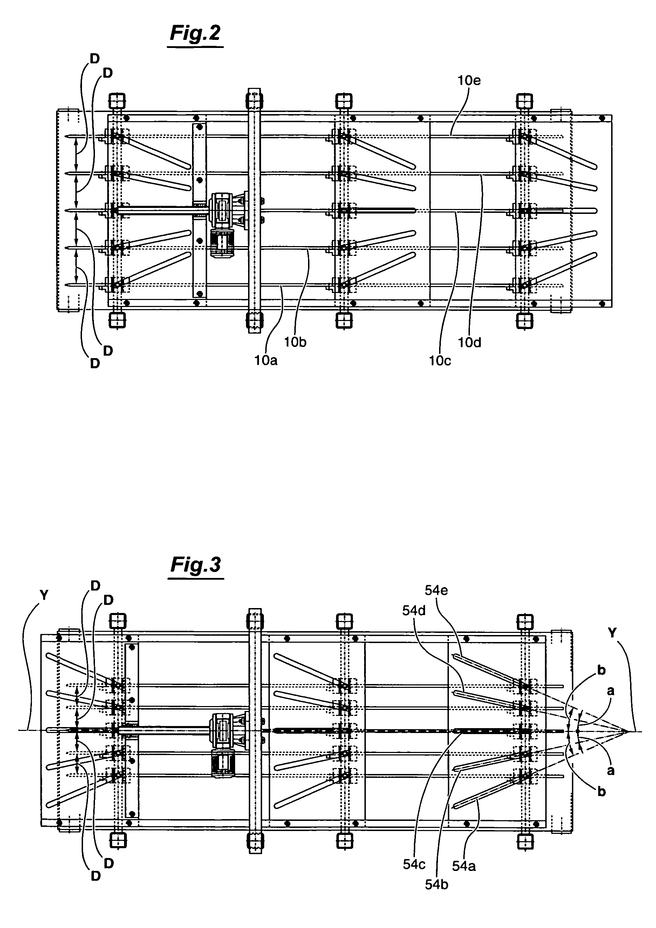

- Above the said transverse bars 41, 42, 43, there are provided one or more regulator means 51, 52, 53 with shaped longitudinal profiles 54a-54b-etc., 55a-55b-etc., 56a-56b-etc., such as, for example, plates 51, 52, 53, provided with profiles-slots 54a-54b-etc., 55a-55b-etc., 56a-56b-etc., the said profiles-slots of which, see in particular figure 3, have a particular orientation which is inclined relative to the longitudinal axis Y, and wherein the said profiles-slots 54a-54b-etc., 55a-55b-etc., 56a-56b-etc., are associated in a sliding manner with respective control heads 34a-34b-etc., 35a-35b-etc., 36a-36b-etc., of the support blocks 31a-31b-etc., 32a-32b-etc., 33a-33b-etc.

- More particularly, in the particular embodiment shown by way of example, see for instance in figure 3, the shaped profiles and/or slots 54a, 54b, 54c, 54d, 54e, have longitudinal extensions with angles of inclination a, a, b, b, which differ from one another in relation to the longitudinal axis Y on which the central profile-slot 54c extends.

- Again in the particular and non-limiting embodiment illustrated, again see figure 3, the central profile-slot 54c is non-inclined in relation to the longitudinal axis Y, the first two semi-central profiles-slots 54b, 54d, which are disposed laterally relative to the central profile-slot 54a, are slightly inclined by angles "a" relative to the longitudinal axis Y, and the second two lateral profiles-slots 54a, 54d, which are disposed laterally relative to the said first two semi-central profiles-slots 54a and 54b, are at angles "b" which are more inclined in relation to the first two profiles-slots 54b, 54d, and to the longitudinal axis Y. -If required, the angle of inclination "b" relating to the second two profiles-slots 54a and 54e can be set such as to have an amplitude which is twice the angle of inclination "b" relating to the first two profiles-slots 54b and 54d.

-In addition, in the present embodiment, three plates 51, 52 53 are provided, which are connected to one another longitudinally by means of two longitudinal members 57a and 57b, such that, when a plate 51 is moved, the remaining plates 52, 53 are dragged. -In this context, it is apparent that the system which is the subject of the present invention can co-operate with one or more plates 51, 52, 53.

- Above the plates 51, 52, 53, by means of two further piers 5a and 5b of the machine frame, a cross-member 6 is supported, along which there is secured a gear motor M60, which is designed substantially to rotate a threaded bar 61, which extends longitudinally, and in turn engages with a nut screw unit 62 which is secured to the plate 53, such that, by means of activation of the gear motor M60, the plates 51, 52, 53 are displaced in unison longitudinally in the required direction.

### Functional description of the first embodiment

- By means of this structuring, substantially, by activating the gear motor M60, in order to rotate the longitudinal threaded bar 61 in the required direction, the three plates 51, 52, 53 are moved in unison longitudinally in the required direction, and at the rate of the relative movement between the profiles-slots 54a-54b-etc., 55a-55b-etc., 56a-56b-etc. and the corresponding associated control heads 34a-34b-etc., 35a-35b-etc., 36a-36b-etc., a transverse displacement of the respective support blocks 31a-31b-etc.,32a-32b-etc., 33a-33b-etc. is obtained, with consequent transverse displacement of the respective underlying guides 10a, 10b, etc.

- More particularly, in the present embodiment, see figures 2 and 3, displacement of the plates 51, 52, 53 to the right provides an increase in the distance D between the guides 10a, 10b, etc., and on the other hand, displacement of the plates 51, 52, 53 to the left provides a reduction in the distance D between the same guides 10a, 10b, etc.

- More particularly, because of the particular inclination of the profiles-slots 54a-54b-etc., 55a-55b-etc., 56a-56b-etc., when the plates 51-52-53 are displaced longitudinally, owing to the profiles-slots 54c-55c-56c the central guide 10c does not undergo transverse displacements, owing to the profiles-slots 54b-55b-56b and 54d-55d-56d the first two semi-central guides 10b and 10d move transversely in the opposite direction to, and with the same transverse displacements as, the central guide 10c, and owing to the profiles-slots 54a-55a-56a and 54e, 55e, 56e the second two end guides 10a and 10e also move transversely in the opposite direction to, and with the same transverse displacements as, the central guide 10c, and also preferably with transverse displacement which is twice that executed by the semi-central guides 10b and 10d, thus obtaining regular widening/narrowing of the channels C1, C2, C3, C4, as well as symmetrical widening/narrowing of the same channels relative to the central guide 10c.

- With reference to the embodiment, it should be noted that the said profiles-slots 54c-55c-56c relating to the central guide 10c could also be omitted, since the said central guide 10c does not undergo transverse displacements.

### Structural description of the second embodiment

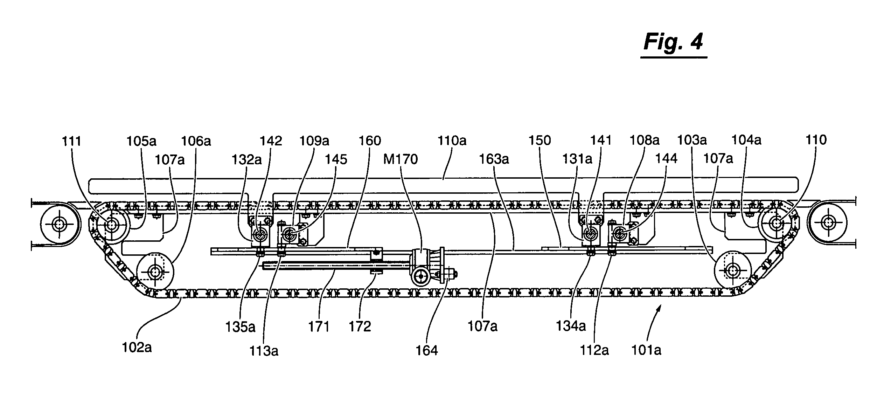

- Figures 4 to 6 illustrate a variant embodiment of the system which is the subject of the present invention.

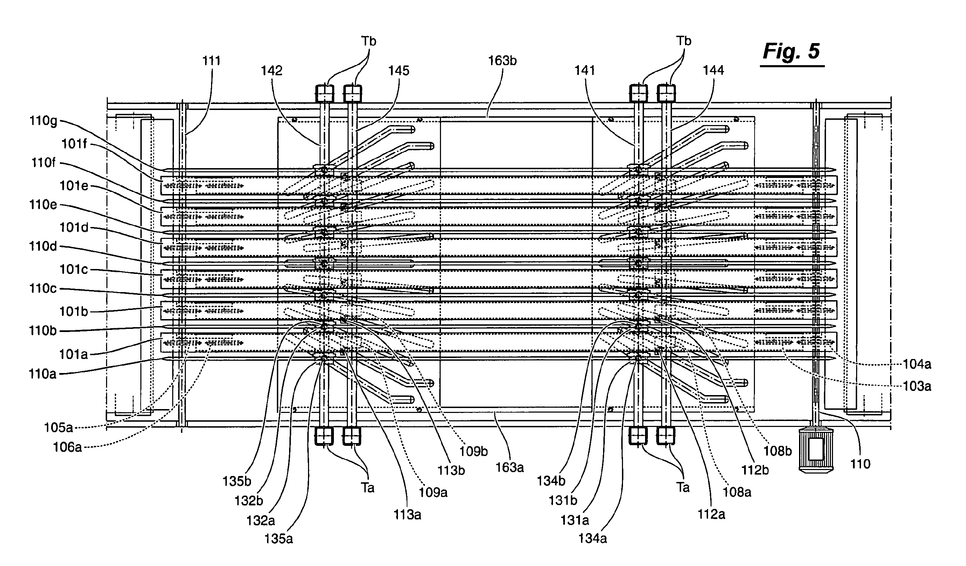

- With reference to figures 4 and 5, in this embodiment the system comprises longitudinal guides 110a, 110b, etc., which are designed to configure channels with longitudinal extension to contain objects, wherein the said objects are supported and advanced on single translation planes, comprising for example a plurality of single conveyors 101a, 101b, etc., which are disposed adjacent to one another and interposed between the said guides 110a, 110b, etc.

- Each longitudinal guide 110a, 110b, etc., is supported from the bottom upwards by means of a respective pair of first support blocks 131a-132a, 131b-132b, etc., which are supported in a sliding manner by means of first transverse bars 141, 142, which are supported by the machine frame Ta, Tb, as previously described.

- The said first support blocks 131a-131b-etc., 132a-132b-etc. have at their base respective first control heads 134a-134b-etc., 135a-135b-etc., which extend vertically downwards, for reasons which will become apparent hereinafter.

- Each conveyor 101a, 101b, etc., see for example the conveyor 101a, comprises a conveyor belt 102a, in the case illustrated a winding belt, which is wound around four wheels 103a-104a-105a-106a, which are supported and connected to one another by means of a frame 107a which extends longitudinally, and also acts as a sliding plane for the upper branch of the belt 102a, wherein the said frame 107a is supported from the bottom upwards by means of a respective pair of second support blocks 108a and 109a, which are supported transversely in a sliding manner by support means, such as by means of transverse bars 144, 145, which are supported by the machine frame Ta and Tb.

- By this means, substantially, a plurality of conveyors 101a, 101b, etc., is obtained, which are disposed adjacent to one another, and are mobile transversely in an independent manner, wherein the upper return wheels 104a-105a, 104b-105b, etc., are engaged transversely in a sliding manner by means of one or two shafts 110 and 111, at least one of which, 110, is preferably of the grooved profile type for transmission of the motion, and wherein the respective support blocks 108a-108b-etc., 109a, 109b,etc., which are defined here as second support blocks, have at their base respective second control heads 112a-112b-etc., 113a-113b-etc., which extend vertically downwards, and preferably on a horizontal plane on which there also lie the first control heads 134a-134b-etc., 135a-135b-etc. of the first blocks 131a-131b-etc., 132a-132b-etc., which support the guides 110a, 110b, etc.

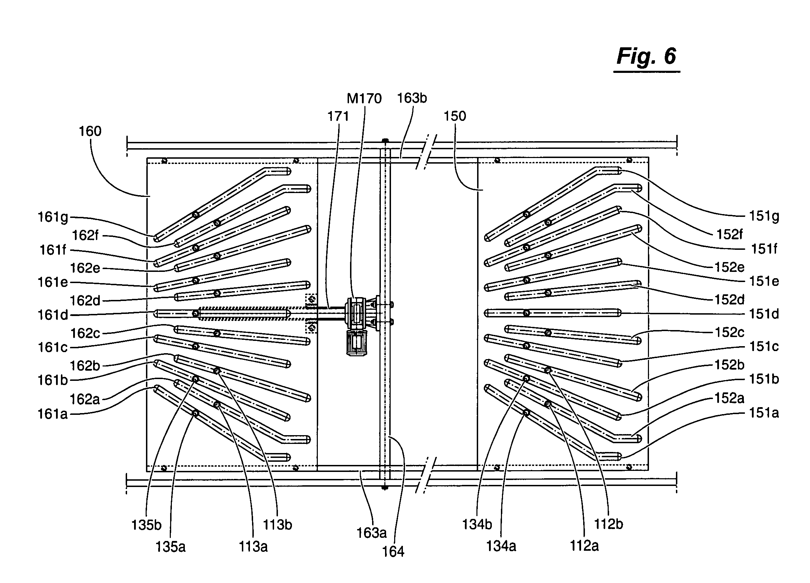

- Beneath the first transverse bars 141, 142 and the second transverse bars 144, 145, which are disposed within the closed-loop path defined by the belts 102a, 102b, etc., there are provided one or more regulator means, such as, for example, two plates 150 and 160, which have shaped stop profiles, and, more particularly, see also figure 6, first profiles-slots 151a, 151b, etc. and 161a, 161b, etc., inside which there slide the respective first heads 134a, 134b, etc., and 135a, 135b, etc., of the respective first blocks 131a, 131b, etc. and 132a, 132b, etc., which are designed to support the guides 110a, 110b, etc., as well as second profiles-slots 152a, 152b, etc. and 162a, 162b, etc., inside which there slide the respective second heads 112a, 112b, etc., and 113a, 113b, etc. of the respective second blocks 108a, 108b, etc. and 109a, 109b, etc., which are designed to support the conveyors 101a, 101b, etc.

-In the present embodiment, the plates 150 and 160 are connected to one another longitudinally by means of two longitudinal members 163a and 163b, and beneath the said two plates 150 and 160, there is supported by the machine frame Ta and Tb a cross-member 164, which is designed to support a gear motor M170, which is designed substantially to rotate a threaded bar 171 which extends longitudinally, and in turn engages with a nut screw block 172 which is secured to the plate 160, such that, by means of activation of the gear motor M170, the threaded bar 171 is rotated in the required direction, and thus the plates 150 and 160 are displaced in unison longitudinally in the required direction.

### Functional description of the second embodiment

- By means of this structuring, substantially, as for the first embodiment, by activating the gear motor M170, in order to rotate the longitudinal threaded bar 171 in the required direction, the two plates 150 and 160 are moved in unison longitudinally in the required direction, and at the rate of the relative movement between the profiles-slots 151a-151b-etc. and 161a-161b-etc. and the corresponding associated control heads 134a-134b-etc. and 135a-135b-etc., there is transverse displacement of the first blocks 131a-131b-etc.and 132a-132b-etc., and thus of the guides 110a-110b-etc., and simultaneously, because of the relative movement between the profiles-slots 152a-152b-etc. and 162a-162b-etc and the associated control heads 112a-112b-etc and 113a-113b-etc., there is transverse displacement of the second blocks 108a-108b-etc and 109a-109b-etc., and thus of the conveyors 101a, 101b, etc.

- For this embodiment also, preferably, substantially as previously described in relation with the first embodiment, as the result of particular inclination of the profiles-slots 151a-151b-etc., 152a-152b, 161a-161b-etc., 162a-162b-etc., there is regular setting, preferably of widening and/or narrowing of the channels defined between the guides 110a-110b, 110b-110c, etc., whilst maintaining the corresponding conveyor 101a, 101b, etc. in the centre relative to the corresponding channel, and, in addition, symmetrical widening/narrowing of the guides 110a, 110b, etc and of the conveyors 101a, 101b, etc., relative to the central guide 110d.

- The description of the system in question is provided purely by way of non-limiting example, and it is thus apparent that all modifications or variants suggested by practice and by its utilisation or usage can be made to it within the context of the following claims, which also form an integral part of the present description.

## Claims

1. System for regulating the transverse distance (D) between longitudinal (Y) guides (10a, 10b, etc. / 110a, 110b, etc.) which are designed to configure longitudinal channels (c1, c2, etc.) to contain objects, which system is particularly suitable for packaging machines, **characterised in that** it comprises:
>- one or more support means (41, 42, 43 / 141, 142), which extend transversely relative to the said guides (10a, 10b, etc. / 110a, 110b, etc.);
>- one or more support blocks (31a, 31b, etc.; 32a, 32b, etc.; 33a, 33b, etc. / 131a, 131b, etc.; 132a, 132b, etc.) which are disposed such as to slide along the said support means (41, 42, 43 / 141, 142), wherein the said support blocks (41, 42, 43/131a, 131b, etc.) are designed to support the said longitudinal guides (10a, 10b, etc. /110a, 110b, etc.) and to have respective control heads (34a, 34b, etc.; 35a, 35b, etc.; 36a, 36b, etc./ 134a, 134b, etc.; 135a, 135b, etc.);
>- one or more regulator means (51, 52, 53 / 150, 160) with shaped-profile (54a, 54b, etc.; 55a, 55b, etc.; 56a, 56b, etc. / 151a, 151b, etc.; 161a, 161b, etc.), wherein the said shaped profiles (54a, 54b, etc.; 55a, 55b, etc.; 56a, 56b, etc. / 151a, 151b, etc.; 161a, 161b, etc.) extend longitudinally in a manner which is inclined relative to the longitudinal axis (Y) of extension of the guides, wherein the said shaped profiles (54a, 54b, etc.; 55a, 55b, etc.; 56a, 56b, etc. / 151a, 151b, etc.; 161a, 161b, etc.) are mobile longitudinally by command, and wherein the said shaped profiles are associated with the respective control heads (34a, 34b, etc.; 35a, 35b, etc.; 36a, 36b, etc./ 134a, 134b, etc.; 135a, 135b, etc.) of the support blocks (31a, 31b, etc.; 32a, 32b, etc.; 33a, 33b, etc. / 131a, 131b, etc.; 132a, 132b, etc.).

2. System according to claim 1, **characterised in that** the said support means (41, 42, 42 / 141, 142) comprise one or more transverse bars (41, 42, 42 / 141, 142) which are supported by the machine frame (2a-2b;3a-3b; 4a-4b / Ta, Tb).

3. System according to claim 1 or claim 2, **characterised in that** the said regulator means (51, 52, 53 / 150, 160) with shaped-profile (54a, 54b, etc.; 55a, 55b, etc.; 56a, 56b, etc. / 151a, 151b, etc.; 161a, 161b, etc.) comprise one or more slots (54a, 54b, etc.; 55a, 55b, etc.; 56a, 56b, etc. / 151a, 151b, etc.; 161a, 161b, etc.) provided in one or more plates (51, 52, 53 / 150, 160) which are mobile longitudinally by command, and **in that** the said slots are connected in a sliding manner with the control heads (34a, 34b, etc.; 35a, 35b, etc.; 36a, 36b, etc./ 134a, 134b, etc.; 135a, 135b, etc.) of the support blocks (31a, 31b, etc.; 32a, 32b, etc.; 33a, 33b, etc. / 131a, 131b, etc.; 132a, 132b, etc.).

4. System according to any one of the preceding claims, **characterised in that** the said shaped profiles and/or slots (54a, 54b, etc.; 55a, 55b, etc.; 56a, 56b, etc. / 151a, 151b, etc.; 161a, 161b, etc.) have a longitudinal extension with angles of inclination (a, b) which differ from one another relative to the longitudinal axis (Y).

5. System according to any one of the preceding claims, **characterised in that** two first, semi-central profiles-slots (54b, 54d) are slightly inclined (a) relative to the longitudinal axis (Y), and two second, lateral profiles-slots (54a, 54d), which are disposed laterally relative to the said two first semi-central profiles-slots (54a, 54b), are more inclined (b) relative to the first two profiles-slots (54b, 54d) and relative to the longitudinal axis (Y).

6. System according to claim 5, **characterised in that** by moving longitudinally the profiles-slots (54a, 54b, etc.; 55a, 55b, etc.; 56a, 56b, etc.) of the regulator means (51, 52, 53), by first profiles-slots (54b-55b-56b, 54d-55d-56d) the first two semi-central guides (10b, 10d) are moved transversely in the opposite direction and with equivalent transverse displacements with reference to the central guide (10c), and by second profiles-slots (54a-55a-56a, 54e-55e-56e) the second two end guides (10a, 10e) are moved transversely in the opposite direction and with equivalent transverse displacements with reference to the central guide (10c), and **in that** the extent of the transverse displacements set for the second two end guides (10a, 10e) is twice that set for the semi-central guides (10b, 10d).

7. System according to any one of the preceding claims, **characterised in that** actuator means (M60, 62, 61) are provided in order to move longitudinally the regulator means (51, 52, 53) with shaped profiles (54a, 54b, etc.; 55a, 55b, etc.; 56a, 56b, etc.).

8. System according to any one of the preceding claims, **characterised in that** the said one or more support means (41, 42, 43) are disposed on a first level which is higher than the object translation plane (1); **in that** the said guides (10a, 10b, etc.) are supported in a manner which is suspended from the top downwards from the said one or more support blocks (31a, 31b, etc.; 32a, 32b, etc.; 33a, 33b, etc.), **in that** the said support blocks have their control heads (34a, 34b, etc.; 35a, 35b, etc.; 36a, 36b, etc.) projecting upwards; and **in that** the said regulator means (51, 52, 53) with shaped profiles (54a, 54b, etc.; 55a, 55b, etc.; 56a, 56b, etc.) are disposed higher than the said support means (41, 42, 43).

9. System for regulating the transverse distance (D) between longitudinal guides (110a, 110b, etc.) and/or between longitudinal conveyors (101a, 101b, etc.) which are designed to configure longitudinal channels (C1, C2, etc.) to contain and support-transport objects, which system is particularly suitable for packaging machines, **characterised in that** it comprises:
>- one or more support means (141, 144, 142, 145), which extend transversely relative to the said longitudinal guides (110a, 110b, etc.) and/or to the said longitudinal conveyors (101a, 101b, etc.);
>- one or more first support blocks (131a, 131b, etc.; 132a, 132b, etc.), which are disposed such as to slide along the said support means (141, 142), wherein the said support blocks (131a, 131b, etc., 132a, 132b, etc.) are designed to support the said longitudinal guides (110a, 110b, etc.) and to have respective first control heads (134a, 134b, etc.; 135a, 135b, etc.);
>- one or more second support blocks (108a, 108b, etc.; 109a, 109b, etc.), which are disposed such as to slide along the said support means (144, 145), wherein the said support blocks (108a, 108b, etc., 109a, 109b, etc.) are designed to support the said longitudinal conveyors (101a, 101b, etc.) and to have respective second control heads (112a, 112b, etc.; 113a, 113b, etc.);
>- one or more regulator means (150, 160) with shaped-profile (151a, 151b, etc.; 152a, 152b, etc., 161a, 161b, etc., 162a, 162b, etc.), wherein the said shaped profiles (151a, 151b, etc.; 152a, 152b, etc., 161a, 161b, etc., 162a, 162b, etc.) extend longitudinally in a manner which is inclined relative to the longitudinal axis (Y) of extension of the guides and of the conveyors, wherein the said shaped profiles (151 a, 151b, etc.; 152a, 152b, etc., 161a, 161b, etc., 162a, 162b, etc.) are mobile longitudinally by command, and wherein the said shaped profiles (151a, 151b, etc.; 152a, 152b, etc., 161a, 161b, etc., 162a, 162b, etc.) are associated with the control heads (134a, 134b, etc.; 135a, 135b, etc.) of the first support blocks (131a, 131b, etc.; 132a, 132b, etc.) and with the control heads (112a, 112b, etc.; 113a, 113b, etc.) of the second support blocks (108a, 108b, etc., 109a, 109b, etc.).

10. System according to claim 9, **characterised in that** the said support means (141, 142, 144, 145) comprise transverse bars which are supported by the machine frame.

11. System according to claim 9 or claim 10, **characterised in that** the longitudinal conveyors (101a, 101b, etc.) each comprise (101a) a conveyor belt (102a), which is wound around wheels (103a-104a-105a-106a) which are supported and connected to one another by means of a frame (107a), and **in that** the said frame (107a) is supported from the bottom upwards by means of a respective pair of second support blocks (108a, 109a).

12. System according to any one of claims 9 to 11, **characterised in that** the support means (141, 142, 144, 145) extend transversely within the closed loop path defined by the belts (102a, 102b, etc.) of the conveyors (101a, 101b, etc.).

13. System according to any one of claims 9 to 12, **characterised in that** the said shaped-profile regulator means (150, 160) comprise one or more slots (151a, 151b, etc.; 152a, 152b, etc., 161a, 161b, etc., 162a, 162b, etc.) provided in one or more plates (150, 160) which are mobile longitudinally by command, and **in that** the said slots (151a, 151b, etc.; 152a, 152b, etc., 161a, 161b, etc., 162a, 162b, etc.) are connected in a sliding manner with the control heads (134a, 134b, etc.; 135a, 135b, etc.; 112a, 112b, etc.; 113a, 113b, etc.) of the first and second support blocks (131a, 131b, etc.; 132a, 132b, etc., 108a, 108b, etc., 109a, 109b, etc.)

14. System according to any one of claims 9 to 13, **characterised in that** the said shaped profiles (151a, 151b, etc.; 152a, 152b, etc., 161a, 161b, etc., 162a, 162b, etc.) comprise at least two first profiles-slots (152c-162c and 152d-162d) which are associated with respective pairs of heads (112c-161c, 112d-161d), the respective blocks (108c-109c, 108d-109d) of which are designed to support two respective conveyors (101c, 101d) and **in that** laterally relative to the said at least two first profiles-slots (152c-162c and 152d-162d), there are provided two second profiles-slots (151c-161c and 151e-161e) which are associated with respective control heads (134c-135c, 134e-135e), the blocks of which (131c-132c, 131e-132e) are designed to support two respective guides (110c, 110e).

15. System according to any one of claims 9 to 14, **characterised in that** the said one or more support means (141, 144, 142, 145) are disposed beneath the object transport plane at a first level; **in that** the said one or more first support blocks (131a, 131b, etc., 132a, 132b, etc.) support the said longitudinal guides (110a, 110b, etc.) at the top and have at the bottom first control heads (134a,134b, etc.; 135a, 135b, etc.); **in that** the said one or more second support blocks (108a, 108b, etc., 109a, 109b, etc.) support the said longitudinal conveyors (101a, 101b, etc.) at the top and have at their bottom respective second control heads (112a, 112b, etc.; 113a, 113b, etc.), and **in that** the said one or more shaped-profile (151a, 151b, etc.; 152a, 152b, etc., 161a, 161b, etc., 162a, 162b, etc.) regulator means (150, 160) are disposed at a second level, lower than the said support means (141, 144, 142, 145).

16. System according to any one of claims 9 to 15, **characterised in that** the first control heads (134a-134b-etc.; 135a-135b-etc.) of the first support blocks (131a-131b-etc.; 132a-132b-etc.) and the second control heads (112a-112b-etc.; 113a-113b-etc.) of the second support blocks (108a-108b-etc.; 109a-109b-etc.) extend vertically downwards and lie on a single horizontal plane.

17. System according to any one of claims 9 to 16, **characterised in that** each conveyor (101a, 101b, etc.) comprises a conveyor belt (102a), which is wound around wheels (103a-104a-105a-106a) which are supported and connected to one another by means of a frame (107a), and **in that** the said frame (107a) is supported from the bottom upwards by means of one or more second support blocks (108a, 109a).

18. System according to claim 17, **characterised in that** at least one (104a, 104b, etc.) of the wheels of each conveyor (101a, 101b, etc.) is engaged in a sliding manner transversely along a shaft (110) for transmission of the motion.
